# EUROPEAN PATENT APPLICATION

(11) **EP 4 834 603 A1**
(43) Date of publication of application: **04.11.2026**
(21) Application number: 26382593.7
(22) Date of filing: 27.04.2026
(51) Int. Cl.: B60F 3/00, B60K 11/02, F01P 3/18, B63J 2/12

(54) **AMPHIBIOUS VEHICLE COOLING SYSTEM**

(30) Priority: 25.04.2025 ES 202530763 U
(71) Applicant: Structural Aerospace Systems S.L., 24010 León (ES)
(72) Inventor: DE JUAN GUTIÉRREZ, Javier, 24010 León (ES); FREILE MANSILLA, Oscar, 24010 León (ES); MERINO FLECHA, Pedro Luis, 24010 León (ES)
(74) Representative: Pons IP

(57) **Abstract**

The object of the invention is an amphibious vehicle cooling system comprising a coolant which is cooled by means of air or water from outside the system itself, depending on whether the vehicle is moving on land or navigating in water. In this way, the cooling system cools a coolant that is heated as it passes through one or more cooling subsystems that cool circuits that generate heat in the vehicle such as engines or batteries, with water or air outside the vehicle's own cooling system, depending on whether the vehicle is travelling on land or navigating in water.

## Description

### OBJECT OF THE INVENTION

The object of the invention is an amphibious vehicle cooling system. Said amphibious vehicles can travel on land or navigate in water. Said cooling system serves to cool the coolant used by the vehicle to absorb excess heat generated by various vehicle devices.

### BACKGROUND OF THE INVENTION

Amphibious vehicles are known which are able to travel on land, on roads, paths or the like, as well as navigate in water wherein the vehicle moves at least partially submerged in a sea, lake or similar. Amphibious vehicles are therefore configured to move and navigate, in many cases having parallel systems to adapt to the terrain.

Among others, one problem of amphibious vehicles is the cooling system, since land vehicles are usually cooled by air from outside the vehicle, while water vehicles are usually cooled by water circuits drawn from the aquatic environment outside the vehicle.

At present, a first configuration in amphibious vehicles is the arrangement of two parallel and different cooling systems, so that the air-cooling system operates during land travel and the water-cooling system operates during water navigation. For example, during water navigation, the air-cooling system may be partially flooded or isolated in a watertight manner, while in land travel the water-cooling system could be drained or closed tightly.

This first configuration means that amphibious vehicles have large cooling systems and duplicate elements, with air and water cooling systems that increase the cost and weight of the amphibious vehicle. Furthermore, the arrangement of parallel cooling systems leads to complexity in installation and a larger occupation of the vehicle's interior space.

A second configuration is that of using a single air-cooling system in both land and water travel, with the trade-off that this cooling system is less efficient compared to water cooling when the vehicle is navigating in an aquatic environment.

### DESCRIPTION OF THE INVENTION

The object of the invention is an amphibious-vehicle cooling system that cools by means of air or water from outside the system itself, depending on whether the vehicle is travelling on land or navigating in water. In this way, the cooling system cools a coolant that is heated as it passes through one or more cooling subsystems that cool circuits that generate heat in the vehicle such as engines or batteries, with water or air outside the vehicle's own cooling system.

The cooling system preferably has a case comprising at least one coolant outlet through which the coolant exits the case at a first temperature. The coolant exiting the case feeds at least one cooling subsystem of some circuit of the amphibious vehicle that needs to be cooled, such as a heat engine, power electronics and/or a battery. Preferably, the coolant exiting the case feeds two or more cooling subsystems; optimally, it feeds all the cooling subsystems of the amphibious vehicle.

Preferably, the coolant outlet has a watertight connection with respect to the case itself.

Preferably, the coolant throughout the entire circuit, case and circuits to be cooled, remains in a liquid state, but other types of coolants that change from liquid to gaseous state during the circuit, or even do not change their gaseous state during the entire circuit, are not excluded.

Furthermore, the case comprises a coolant inlet from the at least one cooling subsystem. Preferably, from all the cooling subsystems. In operation, the incoming coolant enters at a second temperature higher than the first temperature. Therefore, the coolant is cooled as it passes through the case, exiting at a lower temperature than the temperature at which it entered, resulting in continuous circulation in which the coolant is heated by the cooling subsystems that need to be cooled and it is cooled in the cooling system. In this way, the cooling system cools said systems that need to be cooled by cooling the coolant.

Preferably, the coolant inlet has a watertight connection with respect to the case itself.

The case contains at least one first radiator or air/coolant heat exchanger through which the coolant passes via a first circuit comprising at least one pipe. In operation, the coolant passing through said first circuit is cooled as the aforementioned first circuit is in the path of an air flow coming from outside the case. Said air flow enters the case at a third temperature lower than the second temperature at which the coolant enters the case.

The case further comprises a water inlet and a water outlet.

Preferably, the water inlet has a watertight connection with respect to the case itself, e.g., by means of bushings in the form of pipes or pipe fittings.

Preferably, the water outlet has a watertight connection with respect to the case itself, e.g., by means of bushings in the form of pipes or pipe fittings.

The case further contains at least one second water/coolant heat exchanger through which the coolant passes via a second circuit comprising at least one pipe. In operation, the coolant passing through said second circuit is cooled due to the fact that:
- the aforementioned second circuit is in the path of a water flow coming from outside the case, preferably from the aquatic environment, if present in same, and/or
- the aforementioned second circuit is surrounded by a third circuit comprising at least one pipe through which water coming from outside the case circulates, preferably from the aquatic environment, if present in the same,
wherein the water coming from outside the case, preferably from the aquatic environment, if present in the same, enters the case through the water inlet with a fourth temperature lower than the second temperature at which the coolant enters the case and exits the case through the water outlet with a fifth temperature higher than the fourth temperature.

In this way, two ways of cooling are available in a single case in a compact form, both ways cooling by air or water from outside the case, i.e., ambient air or water from navigating in water. The replacement of said case would allow the entire cooling system to be replaced, thus speeding up maintenance in the event of a breakdown.

Preferably, the cooling system contains all the radiators/heat exchangers (first and second heat exchangers) of all the cooling systems present in the vehicle that exchange heat with the outside inside of the case.

Moreover, the case has at least one air inlet and one air outlet on at least one of its surfaces, so that air from outside the case can enter and exit the case itself. The arrangement of the air inlet and air outlet in the case means that the air flow from the air inlet to the air outlet passes through the first circuit in order to cool the coolant passing through said first circuit. Preferably, said air flow passing through the first circuit comes from a forced air system, such as at least one fan/air compressor. Said forced air system forces the air current so that cold air is drawn into the case from outside and, in turn, warm air is drawn out from inside the case, preventing the accumulation of warm air inside the case. More preferably, said forced air system is mounted on the case itself. Optimally, said forced air system will be mounted on at least one surface of the case.

Preferably, the forced air system only operates when the amphibious vehicle drives on land and, also more preferably, in the transition to navigation in the water environment. The reason for this is that during water navigation, waves or splashes from the water environment itself can introduce water into the case through the air inlets and outlets. Said inlet of water into the case could affect both the very components of the forced air system and the very components inside the case, in particular electrical components or connections.

In order to prevent said possible water for entering, preferably, both the air inlets and outlets can have a blocking system, such as movable slats arranged over the air inlets and outlets themselves, so that, preferably, an actuator can move them between at least a first position that allows the passage of air and a second position that blocks the passage of air. In this way, during water navigation, the movable slats can block the passage of water into the case, while during land travel, the movable slats can allow the passage of air. Optimally, the slats can be in the form of panels that can be hinged by the actuator, which are positioned perpendicular to the air inlets and outlets to allow passage and which overlap or couple together over the air inlets and outlets to block the passage. Said slats can be independent for each inlet or outlet or they can be arranged over several air inlets and outlets at the same time. In this way, the blocking system can prevent flooding of the interior of the case, thus ensuring the watertightness of the case during navigation.

Optionally, the cooling system can be provided with anti-drip quick connections for the cooling or water ducts. This prevents possible leakage of coolant or water inside the case, while allowing a simple coupling that allows the elements to be replaced or allows easy assembly.

Optionally, the case can be provided with a bilge pump therein, which can remove any water that may be inside the case itself through a drain pipe provided for this purpose. In this way, the bilge pump prevents flooding of the interior of the case, preventing the electrical and/or electronic devices in the case itself from getting wet and being damaged. Said bilge pump would be an additional means of protection, such as the slats themselves, which prevent water from entering the interior of the case during navigation, so that the water removed by said bilge pump could come from small leaks or misalignment between slats.

Optionally, the case is provided with a first pumping system to assist displacement of the coolant. Said first pumping system may consist of one or more pumps. Said first pumping system may be replaced or supplemented by other drive means arranged outside the case and away from the cooling system.

Optionally, the case is provided with a second pumping system to assist displacement of the water from outside the case used to cool the coolant during navigation in the water environment. Said second pumping system may consist of one or more pumps. Said second pumping system may be replaced or supplemented by other drive means arranged outside the case and away from the cooling system.

The case preferably has electrical and/or electronic connections on one of its surfaces that can transmit electrical power and/or information both to elements inside the case itself and from elements of the case itself to outside the case. In this way, the electrical and/or electronic connections can power and control the different elements of the cooling system, such as fans, pumps or the actuator for the blocking system, as well as inform elements outside the case of the different elements inside the same.

Optionally, the case can be provided with at least one sensor. This sensor can be a temperature, pressure, flow and/or water presence sensor. Preferably, the case has two sensors. With these sensors, for example, the temperature of the coolant at some point inside the case, the temperature of the water in the aquatic environment for cooling the coolant, the pressure of the coolant at some point in the coolant circuit or the presence of water inside the case can be detected. Preferably, said sensors are located inside the case itself. Said sensors may be connected to a controller located inside and/or outside the case. The controller can process the information from the aforementioned sensors to act on some element inside or outside the case or even to forward the information to outside the case for further processing. For example, the water presence sensor can detect if there is water inside the case and the controller associated with said sensor can decide whether or not to activate the bilge pump as required. Another example is that the temperature sensor can be used to detect the temperature inside the case, so that said temperature can be used to control the rotational speed of the fans, or the temperature of both the coolant and the water that can circulate therein, thus deciding the speed/pressure of the coolant or water, or even the use of both cooling circuits at the same time.

Optionally, the cooling system also has a manifold inside the case. Said manifold serves to distribute the coolant in at least one of the following options depending on the requirements:
- only by the first heat exchanger, e.g., in land travel,
- only by the second heat exchanger, e.g., in water travel,
- by both exchangers (first exchanger and second exchanger) at the same time, e.g., when the water environment is not sufficient to cool the coolant due to its inlet temperature to the case, and
- by neither heat exchanger, e.g., for maintenance tasks or replacement of elements such as both heat exchangers.

Preferably, said manifold houses at least one valve therein to perform the function of a manifold.

Preferably, said manifold protects the elements it houses in a watertight manner with respect to the rest of the interior of the case. More preferably, said manifold, in turn, can be crossed by the different ducts that are connected to the valves that it can house. Optimally, the manifold also has electrical or mechanical connections that allow the connection of said elements housed therein, such as solenoid valves.

Preferably, the manifold comprises both a first three-way valve that is connected to the coolant inlet, the first heat exchanger and the second heat exchanger, and a second valve that is connected to the coolant outlet, the first heat exchanger and the second heat exchanger. In this way, the first and second three-way valves determine whether the coolant is cooled by the first heat exchanger or by the second heat exchanger, depending on whether the coolant inlet and outlet are connected to the first heat exchanger or to the second heat exchanger.

Preferably, at least two different types of connections to the inside of the case from the following list: coolant inlet/outlet, water inlet/outlet, electrical and/or electronic connections, are located on the same surface, area or zone of the case itself. Optimally, all the connections listed above are arranged on the same surface, area or zone. This arrangement of the different connections improves and optimises the installation process of the case itself in the vehicle itself.

Preferably, the case, due to having different conduits with liquids therein, is a completely watertight element with respect to the interior of the vehicle, with both hose and electrical connections being made by means of watertight bushings, preventing water or dust from exiting from inside the case to the vehicle where it is to be mounted.

### DESCRIPTION OF THE DRAWINGS

As a complement to the description provided herein, and for the purpose of helping to make the features of the invention more readily understandable, in accordance with a preferred practical exemplary embodiment thereof, said description is accompanied by a set of drawings constituting an integral part of the same, wherein by way of illustration and not limitation, the following has been represented:
Figure 1 shows a perspective and partially exploded view of the cooling system of the present invention.
Figure 2 shows a sectional and schematic view of the cooling system.

### PREFERRED EMBODIMENT OF THE INVENTION

A preferred embodiment of the amphibious vehicle cooling system with both air and water cooling that is the object of this invention is described below.

The cooling system of the preferred embodiment comprises a case (1) with electrical and/or electronic connections (15), at least one coolant inlet (2) in the case (1) through which the coolant enters at a first temperature and at least one coolant outlet (3) in the case (1) through which the coolant exits at a second temperature lower than the first temperature. The coolant inlet (2) and the coolant outlet (3) communicate the coolant from the case (1) to cooling subsystems that cool circuits of the vehicle itself that generate heat and/or need to be cooled, such as heat engines, power electronics, or battery cooling.

The cooling system has a manifold (12) that at least comprises a first three-way valve (10) and a second three-way valve (11). The manifold (12) is a watertight component that does not allow liquid to exit into the case (1). Furthermore, said manifold (12) comprises control elements for the respective first and second three-way valves (10, 11). This manifold (12) protects both three-way valves (10, 11) and electrical connections controlling said three-way valves (10, 11) from elements or fluids inside the case (1). Furthermore, the manifold (12) has control elements that allow the position of both the first and the second three-way valve (10, 11) to be changed.

The first three-way valve (10) is connected to the coolant inlet (2) and the second three-way valve (11) is connected to the coolant outlet (3).

On the one hand, for cooling the coolant by air, the cooling system inside the case (1) comprises a first heat exchanger (16) connected to the first three-way valve (10) and to the second three-way valve (11) independently of each other. Said first heat exchanger (16) is designed to cool the coolant by means of air from outside the case (1).

The case (1) also has an air inlet (6) and an air outlet (7) on respective surfaces of the case (1) for cooling the first heat exchanger (16) by means of an air flow from outside the case (1). Said air inlets and outlets (6, 7) are directed towards the first heat exchanger (16) itself.

The first heat exchanger (16), in turn, comprises a first circuit (not shown) designed to circulate coolant and configured to receive the air flow coming from outside the case (1) and circulating between the air inlet and outlet (6, 7), for cooling the coolant.

Furthermore, the case (1) itself has a forced air system, in the example, the forced air system comprises six fans (8), three at the air inlet (6) and another three at the air outlet (7). Said forced air system forces air from outside the case (1) to enter through the respective air inlet (6), pass through the first heat exchanger (16) to cool the coolant passing through the first heat exchanger (16) itself, and lastly exit through the air outlet (7).

The case (1) further comprises a blocking system for both the air inlet and outlet (6, 7). Said blocking system serves to let air pass or to close the air passage through the air inlet and outlet (6, 7). In the example, the blocking system, in turn, comprises movable slats (9) located over the air inlet and outlet (6, 7) on the outside of the case (1). Furthermore, the case (1) itself comprises an actuator (18) linked to said slats (9) that is capable of opening and closing said air inlet and outlet (6, 7) through said slats (9). These slats (9) are controlled by the actuator (18), which moves them between an open position in which the air from outside the case (1) circulates through the air inlet and outlet (6, 7) and a closed position which closes said air passage. Preferably, this closed position ensures that the case (1) remains airtight or watertight to the outside of the surrounding case (1).

The case (1), for cooling the coolant by water, further comprises a second heat exchanger (17) therein. Said second heat exchanger (17) is also connected to both the first three-way valve (10) and the second three-way valve (11) independently. Said second heat exchanger (17) is designed to cool the coolant by means of water from outside the case (1), in particular from the water in the environment through which the amphibious vehicle navigates.

The case (1) also has a water inlet (4) and a water outlet (5) connected to the second heat exchanger (17). Said water inlets and outlets (4, 5) are designed to introduce water into the case (1) at a certain temperature and to remove the water at a higher temperature than that at which it enters. Said water is used to cool the coolant circulating through the second heat exchanger (17).

The second heat exchanger, in turn, comprises a second circuit (not shown) designed to circulate coolant and located in the path of a water flow coming from outside the case (1) and/or surrounded by a third circuit (not shown) through which water from outside the case (1) circulates and which circulates between the water inlet and outlet (4, 5), for cooling the coolant.

The case (1) has electrical and/or electronic connections (15) designed to power and control different elements inside the case (1) from outside the case (1). Examples of said elements could be the fans (8), the three-way valves (10, 11) and the actuator (18).

Through said electrical and/or electronic connections (15), the elements arranged in the case (1), such as the fans (8), are electrically powered, and the three-way valves (10,11) are electrically controlled to establish the connection between the inlet and outlet of the coolant (2,3) with the first heat exchanger (16) or the second heat exchanger (17). The actuator (18) is also controlled by the electrical and/or electronic connections (15) to set the position of the slats (9) according to land or water travel.

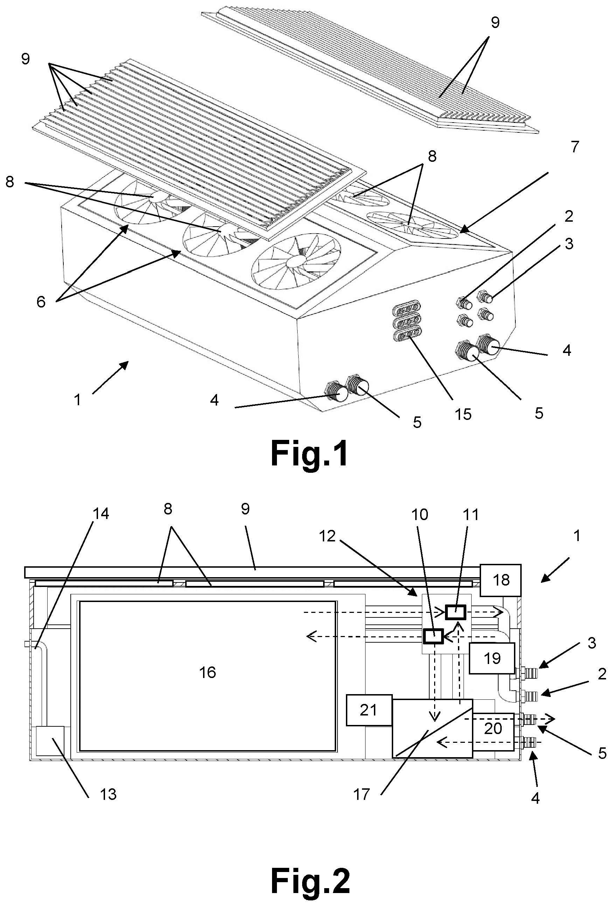

Fig.1 shows the case (1) and the slats (9) exploded over the air inlets and outlets (6, 7) of the case (1) in a perspective and exploded view. The slats (9) allow or prevent the entrance of air or water from outside the case (1) to inside the case (1). These slats (9) are controlled by the actuator (18), as described above, which moves the slats (9) between the open position, as shown in Fig.1, and a closed position, not shown, in which the slats (9) are hinged and overlapped so that the inside of the case (1) remains watertight from the outside.

On a surface of the case (1), the system has connections to the coolant circuit of the amphibious vehicle via the coolant inlet and outlet (2, 3), to the water circuit via the water inlet and outlet (4, 5), and to the electrical circuit of the vehicle via the electrical and/or electronic connections (15).

Fig.2 shows a schematic cross-section of the inside of the case (1), where arrows show the flows of coolant, air and water inside the case (1) during operation. Said circuits are not all active at the same time, but depend on the first and second three-way valves (10, 11), as well as on the vehicle's mode of travel, by land or water.

The cooling system is connected to the coolant circuit of the vehicle, so that the heated coolant from at least one cooling subsystem of a circuit to be cooled or which generates heat of the vehicle is conducted through the coolant inlet (2) to the first three-way valve (10). From said first three-way valve (10), the coolant is conducted to the first heat exchanger (16) if the vehicle is travelling by land, or to the second heat exchanger (17) if the vehicle is navigating in water. Said first three-way valve (10) may be automatically controlled or remotely controlled by the vehicle driver via the electrical and/or electronic connections (15).

In both, the first heat exchanger (16) and the second heat exchanger (17), the coolant is cooled, so that the coolant enters at an initial temperature and exits at a final temperature cooler than the initial temperature in both the first heat exchanger (16) and the second heat exchanger (17) depending on the vehicle's mode of travel, cooling through the first heat exchanger (16) when by land, or cooling through the second heat exchanger (17) when by water.

The cooling of the coolant in the first heat exchanger (16) takes place by air circulation. During land travel, the slats (9) are in the open position allowing air to enter from outside the case (1). The fans (8) are activated in such a way that some of the fans (8) cause cold air to be drawn from outside the case (1) into the case (1) and some of the fans (8) cause hot air to be drawn from inside the case (1) to outside the case (1). In this way, the forced circulation of air causes the surface of the first circuit to cool and thus the coolant circulating through it also cools. Lastly, the cooled coolant is conducted to the second three-way valve (11).

When the amphibious vehicle changes from land travel to water navigation, the actuator (18) moves the slats (9) from an open position to a closed position where they overlap, closing the air inlet and outlet (6,7) to the interior of the case (1). In this way, the inside of the case (1) is tightly closed to prevent water from the aquatic environment itself from entering the case (1) itself. When the amphibious vehicle changes from water navigation to land travel, the opposite occurs, where the slats (9) move from a closed position to an open position via the actuator (18) itself.

Similarly, when the amphibious vehicle changes from land travel to water navigation, the first three-way valve (10) is actuated to stop conducting the coolant to the first heat exchanger (16) and to conduct the coolant to the second heat exchanger (17). Said control is performed by the electrical and/or electronic connections (15) remotely by the driver or automatically. When the amphibious vehicle changes from water navigation to land travel, the opposite occurs in the first valve (10).

The cooling of the coolant in the second heat exchanger (17) takes place by water circulation. During water navigation, the water inlet (4) introduces water from outside the case (1) into the second heat exchanger (17) at an initial temperature. At the outlet of the second heat exchanger (17), the water exits with a second temperature higher than the initial temperature. In this way, the water exiting the second heat exchanger (17) is returned to outside the case (1) via the water outlet (5), while the cooled coolant is conducted to the second three-way valve (11).

From the second valve (11), whether the cooled coolant comes from the first heat exchanger (16) or the second heat exchanger (17), the cooled coolant is conducted through the coolant outlet (3) back to the different cooling subsystems, being heated again and returning to the case (1) in a cyclical manner.

Additionally, the case (1) has a drainage system for any water that may be present inside the case (1) itself. Said drainage system comprises a bilge pump (13) and a drain pipe (14). Preferably, as shown in figure 2, the bilge pump (13) is located inside the case (1). The bilge pump (13) is located at the bottom of the case (1) so that in case the case is flooded or contains water therein, the bilge pump (13) is activated to remove the water from inside the case (1). The drain pipe (14) is connected to the bilge pump (13) at one end and to the outside of the case (1) at the other end, so that water entering the case (1) is removed by the bilge pump (13) and the drain pipe (14) to outside the case (1).

The cooling system further comprises a first circulation pumping system (19) between the coolant inlet and outlet (2, 3) and the two three-way valves (10, 11) and is powered by the electrical and/or electronic connections (15). This first pumping system (19) is designed to drive the coolant from the first three-way valve (10) to the first heat exchanger (16) or the second heat exchanger (17), and to draw the coolant from the first heat exchanger (16) or the second heat exchanger (17) to the second three-way valve (11).

Additionally, the cooling system has a second circulation pumping system (20) between the water inlet and outlet (2, 3) and the second heat exchanger (17). Said second pumping system (20) is further powered by the electrical and/or electronic connections (15). This second pumping system (20) is designed to drive the water from outside the case (1) to the second heat exchanger (17) and to draw the heated water from the second heat exchanger (17) to outside the case (1).

The cooling system also has sensors (21) also located inside the case (1) that are designed to detect temperatures, pressures and/or the presence of water at different positions in the cooling system. These sensors (21) can detect the presence of water inside the case (1), the temperature inside the case (1), in the connections, in the first heat exchanger (16) or in the second heat exchanger (17), the temperature of the coolant or water, or even the pressure in one of the circuits. In this way, the operating parameters of the cooling system are known via the sensors (21).

The case assembly (1) will be completely watertight with respect to the vehicle, with the connections of both the coolant inlet and outlet (2 and 3), the water inlet and outlet (4 and 5), drain pipe (14), and the electrical and/or electronic connections (15) being made by means of watertight bushings, preventing water or dust from exiting the case (1) itself.

## Claims

1. An amphibious vehicle cooling system, **characterised in that** it comprises a coolant that is cooled both through the air outside the system and through the aquatic environment depending on the environment through which the amphibious vehicle travels.

2. The cooling system of claim 1, further comprising a case (1), in turn comprising:
at least one outer surface that confines an interior,
at least one coolant outlet (3) connected to at least one cooling subsystem of the amphibious vehicle and a coolant inlet (2) connected to the at least one cooling subsystem, wherein the coolant exits at a first temperature and enters at a second temperature, the second temperature being higher than the first temperature,
at least one air inlet (6) and one air outlet (7),
at least one first heat exchanger (16) therein, comprising a first circuit designed to circulate coolant and configured to receive an air flow coming from outside the case and circulating between the air inlet and outlet, for cooling the coolant,
a water inlet (4) and a water outlet (5),
at least one second heat exchanger (17) therein, comprising a second circuit designed to circulate coolant and located in the path of a water flow coming from outside the case (1) and/or surrounded by a third circuit through which water from outside the case (1) circulates and which circulates between the water inlet and outlet (4, 5), for cooling the coolant.

3. The cooling system of claim 2, wherein the case (1) comprises a forced air system for moving the air flow.

4. The cooling system of claim 3, wherein the forced air system is mounted inside the case (1) or on the at least one outer surface of the case (1) itself.

5. The cooling system of claims 2 to 4, comprising a blocking system configured to close off access through the air inlets and outlets (6, 7).

6. The cooling system of claims 2 to 5, wherein the case has a bilge pump (13) therein.

7. The cooling system of claims 2 to 6, wherein the coolant inlet (2) and/or the coolant outlet (3) has a watertight connection to the case (1), also preferably the water inlet (4) and/or the water outlet (5) has a watertight connection to the case (1).

8. The cooling system of claims 2 to 7, comprising a first pumping system to assist displacement of the coolant, preferably located inside the case (1).

9. The cooling system of claims 2 to 8, comprising a second pumping system to assist displacement of the water from the outside of the case (1), preferably located inside the case (1).

10. The cooling system of claims 2 to 9, comprising at least one sensor (21) to be selected from a temperature, pressure, flow and/or a water presence sensor, preferably located inside the case (1).

11. The cooling system of claim 10, comprising a controller configured to process the information from the at least one sensor (21) and act on some element inside the case (1), or to forward the information to outside the case (1) for further processing.

12. The cooling system of claims 2 to 11, wherein the case (1) comprises a coolant manifold (12) configured to feed the first heat exchanger (17) and/or the second heat exchanger (17) or neither of the two heat exchangers (16, 17).

13. The cooling system of claim 12, wherein the manifold (12) comprises:
a first three-way valve (10) connected to the coolant inlet (2), the first heat exchanger (16) and the second heat exchanger (17), and
a second three-way valve (11) connected to the coolant outlet (3), the first heat exchanger (16) and the second heat exchanger (17).

14. The cooling system of claims 2 to 13, wherein the case (1) has electrical and/or electronic connections that can transmit electrical power and/or information both to elements inside the case itself and from elements of the case itself to outside the case (1), wherein at least two types of connections to the inside and/or outside of the case (1) to be selected from a list consisting of: coolant inlet/outlet (2, 3), water inlet/outlet (4, 5), electrical and/or electronic connections (15), are located on the same surface, area or zone of the case (1), preferably all the connections of said list being arranged on the same surface, area or zone of the case 1.

15. The cooling system of claims 2 to 14, wherein the case (1) is watertight with respect to the interior of the vehicle.
